(19) Europäisches Patentamt
European Patent Office
Office européen des brevets

(11) **EP 2 984 626 B1**

(12) **FASCICULE DE BREVET EUROPEEN**

(45) Date de publication et mention de la délivrance du brevet:
**16.01.2019 Bulletin 2019/03**

(51) Int Cl.:
***G06T 7/00*** (2017.01)

(21) Numéro de dépôt: **14720670.0**

(22) Date de dépôt: **09.04.2014**

(86) Numéro de dépôt international:
**PCT/FR2014/050854**

(87) Numéro de publication internationale:
**WO 2014/167249 (16.10.2014 Gazette 2014/42)**

(54) **PROCÉDÉ DE CORRECTION D'UNE IMAGE TRIDIMENSIONNELLE D'UN CIRCUIT ÉLECTRONIQUE**

VERFAHREN ZUR KORREKTUR EINES DREIDIMENSIONALEN BILDES EINER ELEKTRONISCHEN SCHALTUNG

METHOD OF CORRECTING A THREE-DIMENSIONAL IMAGE OF AN ELECTRONIC CIRCUIT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2013 FR 1353276**

(43) Date de publication de la demande:
**17.02.2016 Bulletin 2016/07**

(73) Titulaire: **VIT**
**38120 Saint-Egreve (FR)**

(72) Inventeurs:
• **DUPLAIX, François**
  **F-38120 Saint-Egreve (FR)**
• **PERRIOLLAT, Mathieu**
  **F-38120 Saint-Egreve (FR)**
• **ROUX, Romain**
  **F-38120 Saint-Egreve (FR)**

(74) Mandataire: **Cabinet Beaumont**
**4, Place Robert Schuman**
**B.P. 1529**
**38025 Grenoble Cedex 1 (FR)**

(56) Documents cités:
**US-A1- 2012 128 231**

• **André Algotsson: "Solder Paste Inspection from Sparse 3D Measurements", Master's Thesis in Computer Science, 2012, XP055092405, Stockholm, Sweden Extrait de l'Internet: URL:https://www.nada.kth.se/utbildning/gru kth/exjobb/rapportlistor/2012/rapporter12/ algotsson_andre_12054.pdf [extrait le 2013-12-09]**
• **JIANJIE WU ET AL: "A Concise and Rapid Error Correction Algorithm in Automatic Optical Inspection of Solder Paste", INTERNET COMPUTING&INFORMATION SERVICES (ICICIS), 2011 INTERNATIONAL CONFERENCE ON, IEEE, 17 septembre 2011 (2011-09-17), pages 325-329, XP032068602, DOI: 10.1109/ICICIS.2011.85 ISBN: 978-1-4577-1561-7**
• **WAN-YOUNG LEE ET AL: "Correction method for geometric image distortion with application to printed circuit board inspection systems", ICCAS-SICE, 2009, IEEE, PISCATAWAY, NJ, USA, 18 août 2009 (2009-08-18), pages 4001-4006, XP031566012, ISBN: 978-4-907764-34-0**

## Description

Domaine

La présente invention concerne de façon générale les systèmes d'inspection optique et, plus particulièrement, les systèmes de détermination d'images tridimensionnelles destinés à l'analyse en ligne d'objets, notamment de circuits électroniques. L'invention concerne plus particulièrement les systèmes équipés de caméras numériques.

Exposé de l'art antérieur

Les systèmes d'inspection optique sont généralement utilisés pour vérifier le bon état d'un objet avant sa mise sur le marché. Ils permettent notamment de déterminer une image tridimensionnelle de l'objet qui peut être analysée pour rechercher d'éventuels défauts. Dans le cas d'un circuit électronique comprenant, par exemple, un circuit imprimé équipé de composants électroniques, l'image tridimensionnelle du circuit électronique peut être utilisée notamment pour inspecter le bon état des soudures des composants électroniques sur le circuit imprimé.

Dans ce but, une image tridimensionnelle du circuit imprimé sur lequel a été déposée de la pâte à souder est comparée à une image tridimensionnelle du circuit imprimé en l'absence de pâte à souder, par exemple pour obtenir une image tridimensionnelle représentative des différences entre les images tridimensionnelles du circuit imprimé avec et sans pâte à souder. L'analyse de cette image tridimensionnelle de comparaison permet notamment de déterminer si les soudures des composants électroniques sont satisfaisantes.

Toutefois, les circuits imprimés peuvent comprendre des déformations qui rendent imprécises la comparaison des images tridimensionnelles. La demande de brevet US2012/0128231 décrit un procédé permettant de corriger ces déformations. Toutefois, ce procédé ne permet pas de corriger la totalité des déformations d'une image tridimensionnelle d'un objet déformé.

Résumé

Ainsi, un mode de réalisation prévoit un procédé de correction d'une image tridimensionnelle initiale d'un objet déformé comprenant la fourniture d'un modèle de l'objet non déformé comprenant des premières zones, la détermination dans l'image tridimensionnelle initiale de deuxièmes zones correspondant aux premières zones, la détermination d'une première transformation géométrique qui fait correspondre les deuxièmes zones aux premières zones et la détermination d'une image tridimensionnelle corrigée à partir de la première transformation géométrique et de l'image tridimensionnelle initiale.

Selon un mode de réalisation, le procédé comprend les étapes suivantes :

fournir le modèle de l'objet non déformé comprenant des troisièmes zones ;

acquérir au moins une image bidimensionnelle de l'objet par un capteur d'images ;

rechercher dans l'image bidimensionnelle au moins des quatrièmes zones correspondant aux troisièmes zones ;

déterminer une deuxième transformation géométrique qui fait correspondre les quatrièmes zones aux troisièmes zones ;

appliquer la deuxième transformation aux premières zones pour obtenir des cinquièmes zones dans l'image bidimensionnelle ;

rechercher dans l'image tridimensionnelle initiale les deuxièmes zones correspondant aux cinquièmes zones ;

déterminer une troisième transformation géométrique qui fait correspondre les deuxièmes zones aux cinquièmes zones ; et

déterminer l'image tridimensionnelle corrigée à partir des deuxième et troisième transformations géométriques et de l'image tridimensionnelle initiale.

Selon un mode de réalisation, l'objet comprend un circuit imprimé comprenant au moins un support, des pistes conductrices sur le support et une couche de résine recouvrant au moins en partie les pistes conductrices.

Selon un mode de réalisation, au moins l'une des premières zones comprend une portion plane de la couche de résine.

Selon un mode de réalisation, au moins l'une des premières zones comprend le bord d'une piste conductrice.

Selon un mode de réalisation, au moins l'une des troisièmes zones comprend un motif d'une ouverture traversant le circuit imprimé.

Selon un mode de réalisation, au moins l'une des troisièmes zones comprend un motif d'une piste conductrice changeant de direction.

Selon un mode de réalisation, le procédé comprend une étape de fourniture d'un modèle initial ne comprenant pas les premières et troisièmes zones et une étape de modification du modèle initial pour y ajouter une description des premières et troisièmes zones.

Selon un mode de réalisation, le procédé comprend les étapes suivantes, dans une phase d'apprentissage :

acquérir une image tridimensionnelle d'un objet d'apprentissage ;

corriger les déformations de l'image tridimensionnelle de l'objet d'apprentissage ;

déterminer des premières et troisièmes zones sur l'image tridimensionnelle corrigée de l'objet d'apprentissage ; et

modifier le modèle initial pour y ajouter une description des premières et troisièmes zones déterminées.

Selon un mode de réalisation, le modèle comprend un fichier de description numérique représentatif d'une image bidimensionnelle.

Selon un mode de réalisation, le procédé comprend, en outre, la détermination d'une quatrième transformation géométrique qui fait correspondre les points de l'image tridimensionnelle de l'objet d'apprentissage aux pixels du modèle initial.

Selon un mode de réalisation, le procédé comprend les étapes suivantes :

déterminer une première image tridimensionnelle d'un circuit imprimé vide ;

déterminer la première transformation géométrique associée à la première image tridimensionnelle ;

corriger la première image tridimensionnelle à partir de la première transformation géométrique associée à la première image tridimensionnelle ;

déterminer une deuxième image tridimensionnelle d'un circuit imprimé recouvert de blocs de pâte à souder ;

déterminer la première transformation géométrique associée à la deuxième image tridimensionnelle ;

corriger la deuxième image tridimensionnelle à partir de la première transformation géométrique associée à la deuxième image tridimensionnelle ; et

comparer les première et deuxième images tridimensionnelles corrigées.

Selon un mode de réalisation, le procédé comprend une étape de sélection de premières zones parmi lesdites premières zones pour la détermination de la première transformation géométrique associée à la deuxième image tridimensionnelle.

Selon un mode de réalisation, le procédé comprend une étape de sélection de troisièmes zones parmi lesdites troisièmes zones pour la détermination de la première transformation géométrique associée à la deuxième image tridimensionnelle.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon partielle et schématique, un mode de réalisation d'un système d'inspection optique de circuits électroniques ;

les figures 2A, 3A et 4A sont des vues de dessus, partielles et schématiques, d'un circuit électronique montrant notamment des éléments constitutifs d'une carte électronique et illustrant des étapes successives d'un exemple de procédé d'inspection du circuit électronique ;

les figures 2B, 3B et 4B sont des coupes, partielles et schématiques, des circuits électroniques représentés respectivement aux figures 2A, 3A et 4A ;

les figures 5A et 5B sont des vues analogues aux figures 2A et 2B dans le cas d'un circuit électronique déformé ;

les figures 6A et 6B sont des vues analogues aux figures 3A et 3B dans le cas d'un circuit électronique déformé ;

la figure 7 illustre, sous la forme d'un schéma-bloc, un mode de réalisation d'un procédé de correction de déformations ;

la figure 8 illustre, sous la forme d'un schéma-bloc, un exemple plus détaillé d'une étape du mode de réalisation illustré en figure 7 ;

la figure 9 représente un exemple de modèle de circuit imprimé correspondant à l'exemple de circuit imprimé des figures 2A et 2B ;

la figure 10 représente une vue de dessus d'un circuit imprimé sur laquelle sont délimitées des zones d'intérêt ;

la figure 11 représente un exemple de modèle de circuit imprimé modifié obtenu à partir de l'exemple de circuit imprimé de la figure 10 ;

la figure 12 illustre, sous la forme d'un schéma-bloc, un exemple plus détaillé d'une autre étape du mode de réalisation illustré en figure 7 ; et

les figures 13A et 13B représentent respectivement une vue de dessus et une coupe d'un circuit électronique déformé sur lequel sont délimitées des zones d'intérêt.

Description détaillée

Par souci de clarté, de mêmes éléments ont été désignés par de mêmes références aux différentes figures et, de plus, les diverses figures ne sont pas tracées à l'échelle. Dans la suite de la description, sauf indication contraire, les termes "sensiblement", "environ" et "de l'ordre de" signifient "à 10 % près". En outre, seuls les éléments utiles à la compréhension de la présente description ont été représentés et sont décrits.

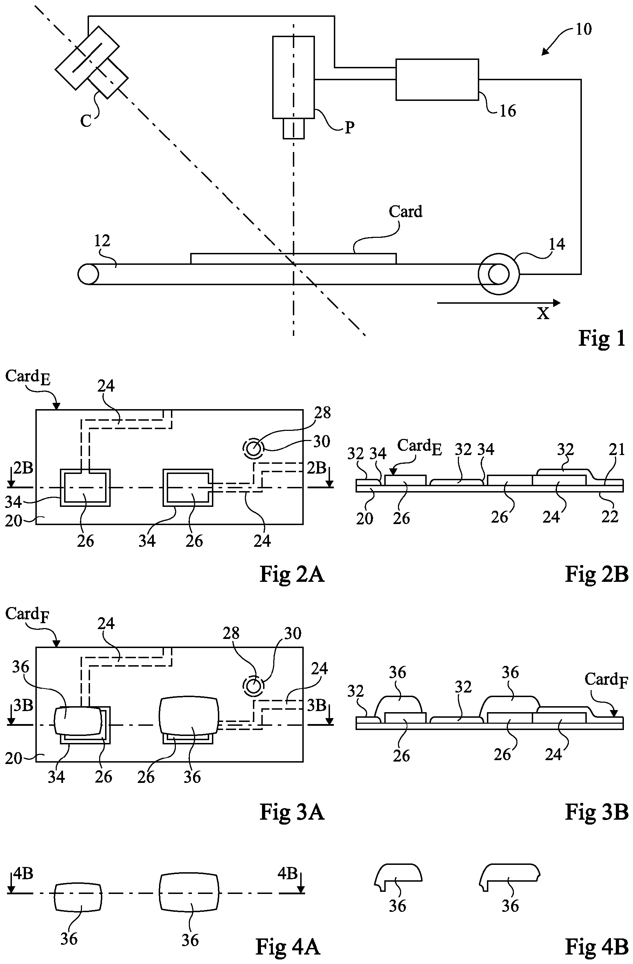

La figure 1 représente, de façon très schématique, un système 10 d'inspection de circuits électroniques. On entend par circuit électronique indifféremment un ensemble de composants électroniques interconnectés par l'intermédiaire d'un support, le support seul utilisé pour réaliser cette interconnexion sans les composants électroniques ou le support sans les composants électroniques mais muni de moyens de fixation des composants électroniques. A titre d'exemple, le support est un circuit imprimé et les composants électroniques sont fixés au circuit imprimé par des joints de soudure obtenus par chauffage de blocs de pâte à souder. Dans ce cas, on entend par circuit électronique indifféremment le circuit imprimé seul (sans composants électroniques, ni blocs de pâte à souder), le circuit imprimé muni des blocs de pâte à souder et sans composants électroniques, le circuit imprimé muni des blocs de pâte à souder et des composants électroniques avant l'opération de chauffage ou le circuit imprimé muni des composants électroniques fixés au circuit imprimé par des joints de soudure.

Le système 10 permet la détermination d'une image tridimensionnelle du circuit électronique Card. Chaque circuit électronique Card est placé sur un convoyeur 12, par exemple un convoyeur plan. Le convoyeur 12 est susceptible de déplacer le circuit Card selon une direction X, par exemple une direction horizontale. A titre d'exemple, le convoyeur 12 peut comprendre un ensemble de courroies et de galets entraînés par un moteur électrique tournant 14. A titre de variante, le convoyeur 12 peut comprendre un moteur linéaire déplaçant un charriot sur lequel repose le circuit électronique Card. Le circuit Card correspond, par exemple, à une carte rectangulaire ayant une longueur et une largeur variant de 50 mm à 550 mm.

Le système 10 comporte un dispositif de projection d'images P comprenant au moins un projecteur, un seul projecteur P étant représenté en figure 1. Le projecteur P est relié à un système informatique 16 de traitement d'images. Lorsque plusieurs projecteurs P sont présents, les projecteurs P peuvent être sensiblement alignés selon une direction perpendiculaire à la direction X. Le système 16 peut comprendre un ordinateur ou un microcontrôleur comportant un processeur et une mémoire non volatile dans laquelle sont stockées des séquences d'instructions dont l'exécution par le processeur permet au système 16 de réaliser les fonctions souhaitées. A titre de variante, le système 16 peut correspondre à un circuit électronique dédié. Le moteur électrique 14 est, en outre, commandé par le système 16.

Le système 10 comporte, en outre, un dispositif d'acquisition d'images C comprenant au moins une caméra numérique, une seule caméra C étant représentée en figure 1. La caméra C est reliée au système informatique 16 de traitement d'images. Lorsque plusieurs caméras C sont présentes, les caméras C peuvent être sensiblement alignées, par exemple par groupes de caméras, de préférence selon une direction perpendiculaire à la direction X et/ou être disposées de part et d'autre du projecteur ou des projecteurs P.

Les moyens de commande du convoyeur 12, de la caméra C et du projecteur P du système d'inspection optique 10 décrit précédemment sont à la portée de l'homme de l'art et ne sont pas décrits plus en détails. A titre de variante, la direction de déplacement du circuit Card peut être une direction horizontale perpendiculaire à la direction X représentée en figure 1.

Le système 10 est adapté à déterminer une image tridimensionnelle du circuit Card par projection d'images, par exemple des franges, sur le circuit à inspecter. Dans le présent mode de réalisation, la caméra C et le projecteur P sont fixes et le circuit électronique Card est déplacé par rapport à la caméra C et au projecteur P par l'intermédiaire du convoyeur 12. A titre de variante, le circuit électronique Card est fixe et la caméra C et le projecteur P sont déplacés par rapport au circuit électronique Card par tout dispositif de convoyage adapté.

La figure 2A est une vue de dessus, partielle et schématique, d'un circuit imprimé Card$_E$ qui n'est muni ni de composants électroniques ni de blocs de pâte à souder. Un tel circuit Card$_E$ est appelé par la suite carte vide. La figure 2B est une coupe du circuit imprimé Card$_E$ de la figure 2A selon la ligne 2B-2B.

La carte vide Card$_E$ peut correspondre à un circuit imprimé multicouches, comprenant un empilement de couches isolantes entre lesquelles sont prévues des pistes conductrices, ou à un circuit imprimé monocouche comprenant un support isolant sur une face duquel ou sur les deux faces duquel sont prévues des pistes conductrices. Dans la suite de la description, on décrit un circuit imprimé monocouche Card$_E$ même s'il est clair que le circuit imprimé Card$_E$ peut être un circuit imprimé multicouches.

La carte vide Card$_E$ comprend un support 20 isolant ayant des faces opposées supérieure et inférieure 21, 22. Des pistes conductrices 24 et des plages d'accueil 26 sont disposées sur la face 21. Les pistes conductrices 24 peuvent correspondre à des bandes d'un matériau conducteur, notamment du cuivre, ayant par exemple une largeur de 0,5 à 10 mm, de préférence de 0,5 à 3 mm. La carte vide Card$_E$ peut, en outre, comprendre sur la face 21 des portions, non représentées, de plaques d'un matériau conducteur, par exemple du cuivre, entourant les pistes conductrices 24 notamment pour former un plan de masse. Les plages d'accueil 26 sont des zones conductrices dudit matériau conducteur, destinées chacune à recevoir un bloc de pâte à souder pour la connexion de composants électroniques. Les plages d'accueil 26 ont, par exemple, une section rectangulaire ou une section circulaire. A titre d'exemple, chaque plage d'accueil 26 a, en vue de dessus, la forme d'un rectangle ayant une longueur variant d'une centaine de micromètres à une dizaine de millimètres et une largeur variant d'une centaine de micromètres à une dizaine de millimètres. Le circuit Card$_E$ peut, en outre, comprendre des ouvertures 28 qui traversent la totalité du support 20 et dont les flancs sont recouverts d'un matériau conducteur 30, par exemple du cuivre. Le circuit imprimé Card$_E$ comprend une couche de résine 32 qui recouvre le support 20, les pistes conductrices 24 et le plan de masse s'il est présent, mais qui ne recouvre pas les plages d'accueil 26. En effet, des ouvertures 34 sont prévues dans la couche de résine 32 pour exposer les plages d'accueil 26. Les bords des pistes conductrices 24 recouverts de la couche de résine 32 sont représentés par des lignes en traits pointillés sur les différentes vues de dessus.

La figure 3A est une vue de dessus, partielle et schématique, d'un circuit imprimé Card$_F$ qui a la même structure que la carte vide Card$_E$ de la figure 2A et qui comprend, en outre, des blocs de pâte à souder 36 et éventuellement des composants électroniques. Le circuit Card$_F$ est appelé par la suite carte pleine. La figure 3B est une coupe du circuit imprimé Card$_F$ de la figure 3A selon la ligne 3B-3B. Sur les figures 3A et 3B, deux blocs de pâte à souder 36 sont représentés. A titre d'exemple, les blocs de pâte à souder 36 sont posés par sérigraphie ou par un procédé de pose point par point. Un procédé de formation de blocs de pâte à souder par sérigraphie consiste à recouvrir la carte vide Card$_E$ d'un masque de sérigraphie comprenant des ouvertures aux emplacements des plages d'accueil 26 et à étaler de la pâte à souder sur le masque pour former les blocs de pâte à souder au travers des ouvertures du masque.

Le système d'inspection 10 est utilisé pour déterminer une image tridimensionnelle I3D$_E$ de la carte vide Card$_E$ et une image tridimensionnelle I3D$_F$ de la carte pleine Card$_F$. Une image tridimensionnelle d'un circuit électronique correspond à un nuage de points, par exemple plusieurs millions de points, d'au moins une partie de la surface extérieure du circuit dans lequel chaque point de la surface est repéré par ses coordonnées (x, y, z) déterminées par rapport à un repère d'espace à trois dimensions R (Ox, Oy, Oz). A titre d'exemple, le plan (Ox, Oy) correspond à un plan de référence du système d'inspection 10, généralement parallèle au plan contenant la face supérieure 21 ou la face inférieure 22 du circuit imprimé. La direction (Oz) est perpendiculaire au plan (Ox, Oy), c'est-à-dire perpendiculaire aux faces 21 et 22. Dans la suite de la description, on appelle image bidimensionnelle, ou image 2D, une image numérique acquise par l'une des caméras C et correspondant à une matrice de pixels. Dans la suite de la description, sauf indication contraire, le terme image fait référence à une image bidimensionnelle.

Le système de traitement 16 détermine une nouvelle image tridimensionnelle I3D$_S$ par comparaison de l'image tridimensionnelle I3D$_F$ de la carte pleine Card$_F$ et de l'image tridimensionnelle I3D$_E$ de la carte vide Card$_E$. L'image tridimensionnelle I3D$_S$ comprend seulement les éléments qui ne sont pas communs entre les images tridimensionnelles Card$_F$ et Card$_E$. L'image I3D$_S$ obtenue correspond donc à une image tridimensionnelle de la surface des blocs de pâte à souder 36 seuls, et éventuellement des composants électroniques s'ils sont présents sur la carte pleine Card$_F$.

La figure 4A est une vue de dessus de l'image I3D$_S$ obtenue à partir de la carte pleine Card$_F$ représentée aux figures 3A et 3B et de la carte vide Card$_E$ représentée aux figures 2A et 2B. La figure 4B est une coupe de la figure 4A selon la ligne 4B-4B.

A partir d'une analyse de l'image tridimensionnelle I3D$_S$, le système de traitement 16 détermine différents paramètres géométriques associés à chaque bloc de pâte à souder 36. Des exemples de paramètres sont le volume du bloc de pâte à souder, la hauteur moyenne du bloc de pâte à souder, le contour en vue de dessus du bloc de pâte à souder, le décalage du bloc de pâte à souder par rapport à la plage d'accueil 26 sous-jacente, un facteur de forme du bloc de pâte à souder, par exemple le rapport entre la largeur et la longueur du bloc de pâte à souder. Ces paramètres peuvent être comparés à des seuils attendus pour déterminer si les blocs de pâte à souder 36 sont adaptés pour l'obtention d'une liaison mécanique et électrique satisfaisante entre les composants électroniques et le circuit imprimé.

Le procédé d'inspection optique décrit précédemment suppose que les images I3D$_F$ et I3D$_E$ puissent être convenablement comparées. Ceci suppose que le circuit imprimé de la carte pleine Card$_F$ et le circuit imprimé de la carte vide Card$_E$ aient exactement la même forme.

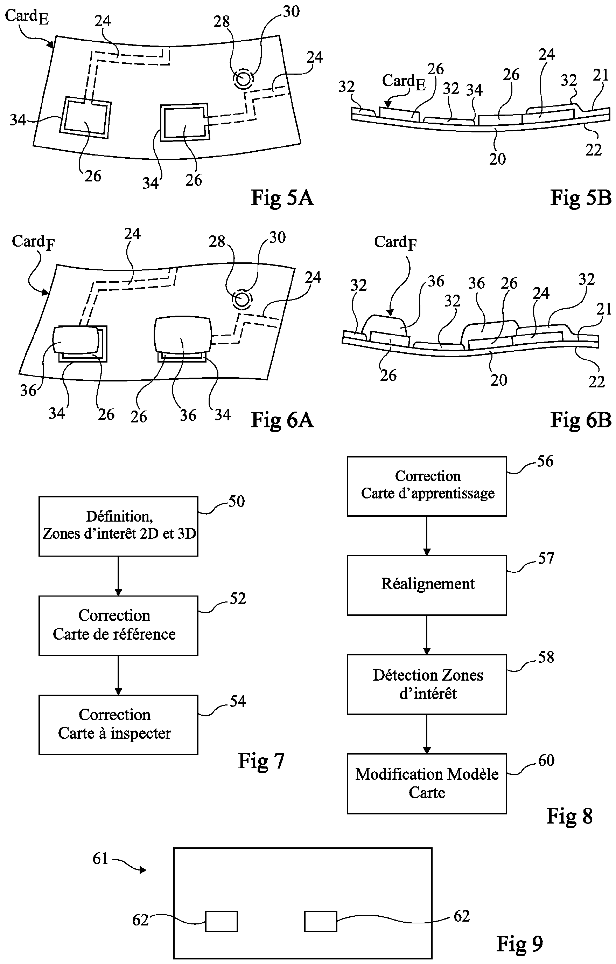

Les figures 5A et 5B sont des vues analogues respectivement aux figures 2A et 2B dans le cas où la carte vide Card$_E$ comprend des déformations et les figures 6A et 6B sont des vues analogues respectivement aux figures 3A et 3B dans le cas où la carte pleine Card$_F$ comprend des déformations.

On distingue généralement deux types de déformation : les déformations qui apparaissent dans la vue de dessus du circuit imprimé (figures 5A et 6A), appelées par la suite déformations 2D, et les déformations qui apparaissent dans des coupes transverses du circuit imprimé (figures 5B et 6B) appelées par la suite déformations 3D. Les déformations 2D et 3D traduisent le gauchissement du circuit imprimé.

Ces déformations peuvent provenir du procédé de fabrication de circuit imprimé. A titre d'exemple, le procédé de fabrication peut comprendre des étapes de chauffage qui peuvent entraîner des déformations dans le circuit imprimé en raison des coefficients de dilatation thermique différents des matériaux qui constituent le circuit imprimé. Le procédé de fabrication peut, en outre, comprendre des étapes d'assemblage, notamment des étapes d'assemblage de composants sur le circuit imprimé, qui peuvent entraîner des déformations. Ces déformations ne sont généralement pas identiques d'un circuit imprimé à l'autre même pour des circuits imprimés correspondant à un même dessin de circuit et fabriqués selon un même procédé de fabrication.

L'image tridimensionnelle I3D$_E$ de la carte vide Card$_E$ est déterminée avec un circuit imprimé de référence. Par circuit imprimé de référence, on entend un circuit imprimé propre dont les déformations sont réalistes et caractéristiques du produit. La détermination de l'image tridimensionnelle I3D$_E$ peut correspondre à la détermination d'une seule image tridimensionnelle avec un seul circuit imprimé de référence. A titre de variante, plusieurs images tridimensionnelles du même circuit imprimé de référence peuvent être déterminées et l'image tridimensionnelle I3D$_E$ correspond à la moyenne des images tridimensionnelles déterminées. Selon une autre variante, plusieurs images tridimensionnelles de plusieurs circuits imprimés de référence peuvent être déterminées. Les images tridimensionnelles sont alors corrigées comme cela est décrit plus en détails par la suite et l'image tridimensionnelle I3D$_E$ correspond à la moyenne des images tridimensionnelles corrigées.

Pour des raisons évidentes de compatibilité avec un traitement à une cadence industrielle, les images tridimensionnelles I3D$_F$ des cartes pleines Card$_F$ à inspecter sont comparées chacune avec la même image tridimensionnelle I3D$_E$. De ce fait, les déformations du circuit imprimé Card$_E$ et du circuit imprimé Card$_F$ peuvent être différentes comme cela apparaît sur les figures 5A, 5B, 6A et 6B.

Ces déformations peuvent rendre difficile, voire impossible, la comparaison des images tridimensionnelles I3D$_E$ et I3D$_F$. Sans la prise en compte des déformations, l'image I3D$_S$ des surfaces extérieures des blocs de pâte à souder, et éventuellement des composants électroniques, peut ne pas être précise. Les paramètres géométriques des blocs de pâte à souder ne peuvent alors pas être déterminés avec précision, voire ne peuvent pas être déterminés du tout.

De façon classique, des marques sont disposées sur le circuit imprimé de façon à être reconnues par le système de traitement 16 sur les images acquises par la caméra C. Il s'agit, par exemple, de marques ayant une forme ou une couleur qui facilitent leur identification sur les images acquises par la caméra C. Le système de traitement 16 peut alors appliquer des transformations géométriques, notamment une translation ou une rotation, aux images tridimensionnelles pour que les marques de chaque image tridimensionnelle soient globalement superposées.

De plus, la comparaison des images I3D$_E$ et I3D$_F$ peut être réalisée localement, portions par portions. Le système de traitement 16 peut alors appliquer des transformations géométriques, notamment une translation ou une rotation, pour faire coïncider le plus possible les portions des images I3D$_E$ et I3D$_F$ qui sont comparées. Toutefois, une telle correction permet de corriger seulement de façon partielle les déformations 2D et 3D. La comparaison des images I3D$_E$ et I3D$_F$ peut donc rester imprécise. En outre, la durée d'un tel procédé qui consiste à comparer et à corriger des images tridimensionnelles portions par portions peut ne pas être compatible avec une exploitation à une échelle industrielle.

La demande de brevet US2012/0128231 décrit un procédé d'inspection optique permettant de corriger des déformations. Toutefois, ce procédé ne permet pas de corriger les déformations 3D.

Ainsi, un objet d'un mode de réalisation est de pallier tout ou partie des inconvénients des procédés d'inspection optique décrits précédemment.

Un autre objet d'un mode de réalisation est de corriger les déformations d'images tridimensionnelles d'objets, notamment des circuits électroniques.

Un autre objet d'un mode de réalisation est d'augmenter la précision d'images tridimensionnelles obtenues par comparaison d'images tridimensionnelles d'objets, notamment des circuits électroniques.

Un autre objet d'un mode de réalisation est de réduire la durée de détermination d'images tridimensionnelles précises obtenues par comparaison d'images tridimensionnelles d'objets, notamment des circuits électroniques.

Un autre objet d'un mode de réalisation est que le procédé de correction est compatible avec une exploitation à une échelle industrielle.

Les procédés de conception et/ou de fabrication par ordinateur de circuits électroniques mettent généralement en oeuvre un ou plusieurs modèles informatiques. En particulier, les logiciels de conception assistée par ordinateur, ou CAO, fournissent généralement des fichiers numériques décrivant les différents éléments du circuit imprimé (notamment le support isolant, les pistes conductrices, les plages d'accueil, les ouvertures et la couche de vernis), les découpes externes du circuit, les perçages, le marquage du circuit, etc. Des exemples de format sont les formats Gerber, ODB++, DXF (sigle anglais pour Drawing eXchange Format) et DPF (sigle anglais pour Dynamic Process Format). Le format Gerber est un format de description d'image vectorielle bidimensionnelle décrivant une image complète d'une couche ou plus du circuit imprimé. Deux formats Gerber sont diffusés largement dans l'industrie du circuit imprimé : le format RS-274D et le format RS-274X (appelé également format Gerber étendu ou X-Gerber).

Les fichiers de description numérique peuvent être utilisés pour commander les machines de fabrication de circuits imprimés. Une machine dédiée à la réalisation d'une étape particulière lors de la fabrication du circuit imprimé peut être commandée à partir d'un fichier de description numérique contenant seulement les éléments de description du circuit imprimé nécessaires à la réalisation de l'étape considérée.

A titre d'exemple, les blocs de pâte à souder peuvent être réalisés par sérigraphie en utilisant un masque de sérigraphie. Ce masque peut être réalisé à partir d'un fichier de description numérique qui décrit seulement les positions et les dimensions des dépôts.

Selon un mode de réalisation, un fichier de description numérique du circuit électronique est utilisé comme modèle de référence pour réaliser la correction des déformations des images I3D$_E$ et I3D$_F$. Selon un mode de réalisation, le fichier de description numérique du masque de sérigraphie pour la réalisation des blocs de pâte à souder est utilisé comme modèle de référence.

La figure 7 représente, sous la forme d'un schéma-bloc, un mode de réalisation d'un procédé de correction d'images tridimensionnelles de circuits électroniques. Le procédé comprend des étapes successives 50, 52 et 54. Les étapes 50 et 52 sont des étapes qui peuvent n'être mises en oeuvre qu'une seule fois pour chaque circuit électronique ayant un nouveau dessin de circuit. L'étape 54 est une étape réalisée de façon répétée pour chaque circuit électronique à inspecter.

A l'étape 50, le système de traitement 16 complète le modèle de référence par des descriptions de zones d'intérêt qui sont utilisées par la suite pour corriger les images tridimensionnelles de la carte vide et des cartes pleines. Une zone d'intérêt est une zone de la carte vide ou pleine qui peut facilement être identifiée sur une image bidimensionnelle de la carte acquise par la caméra C et/ou sur l'image tridimensionnelle de la carte déterminée par le système de traitement 16 et qui peut être utilisée pour évaluer les déformations 2D et 3D des circuits électroniques.

Parmi ces zones d'intérêt, on distingue les zones d'intérêt adaptées pour la détermination des déformations 2D, appelées par la suite zones d'intérêt 2D, et les zones d'intérêt adaptées pour la détermination des déformations 3D, appelées par la suite zones d'intérêt 3D. Les zones d'intérêt 2D sont des zones qui peuvent facilement être identifiées sur la vue de dessus des cartes vide et pleine, c'est-à-dire sur les images bidimensionnelles acquises par la caméra C. Un exemple de zone d'intérêt 2D est une zone du circuit imprimé où une piste conductrice change de direction, généralement selon un angle de 45° ou de 90°. Un autre exemple de zone d'intérêt 2D correspond à une ouverture traversant le circuit imprimé. Les zones d'intérêt 3D sont des zones qui peuvent facilement être identifiées sur l'image tridimensionnelle des cartes vide et pleine. Selon un mode de réalisation, une zone d'intérêt 3D est une zone du circuit imprimé qui est sensiblement stable en hauteur, c'est-à-dire pour laquelle la totalité de cette zone conserve une hauteur sensiblement constante même lorsque le circuit est déformé. Un exemple de zone d'intérêt 3D est une zone du circuit imprimé au niveau de laquelle la couche de résine 32 est présente et ne recouvre pas de pistes conductrices 24 étroites, notamment une zone du circuit imprimé au niveau de laquelle la couche de résine 32 ne recouvre aucune piste conductrice ou recouvre le plan de masse. Selon un autre mode de réalisation, une zone d'intérêt 3D est une zone du circuit imprimé présentant une variation de texture importante. Un exemple de zone d'intérêt 3D est alors un bord d'une piste conductrice 24 ou une ouverture 28 traversant le circuit imprimé.

Les zones d'intérêt 2D ou 3D doivent être visibles sur les images bidimensionnelles ou tridimensionnelles de la carte vide et de la carte pleine. C'est pourquoi les plages d'accueil ne peuvent pas être utilisées comme zones d'intérêt 2D ou 3D. En effet, si les plages d'accueil sont visibles sur les cartes vides, elles sont généralement au moins en partie recouvertes des blocs de pâte à souder sur les cartes pleines. De façon plus générale, les éléments, dont les positions sur deux cartes ayant un modèle commun peuvent ne pas être identiques, ne peuvent pas être utilisés comme zones d'intérêt 2D ou 3D. Par exemple, les inscriptions utilisées notamment pour identifier des composants, et les codes-barres ne peuvent pas être utilisés comme zones d'intérêt 2D ou 3D.

A l'étape 52, la carte vide de référence Card$_E$ est disposée dans le système d'inspection optique 10 et l'image tridimensionnelle I3D$_E$ de la carte vide est déterminée. Une étape de correction des déformations de l'image I3D$_E$ est réalisée. Ceci est obtenu en appliquant une transformation à l'image I3D$_E$ pour fournir une image tridimensionnelle corrigée I3D$_{EC}$ de la carte vide.

A l'étape 54, des cartes pleines Card$_F$ à inspecter sont disposées les unes après les autres dans le système d'inspection optique 10. Chaque carte pleine Card$_F$ comprend des déformations qui peuvent varier d'une carte pleine à l'autre, et par rapport à la carte vide Card$_E$. Une image tridimensionnelle I3D$_F$ est déterminée pour chaque carte pleine. Une étape de correction des déformations de l'image I3D$_F$ est réalisée. Ceci est obtenu en appliquant une transformation à l'image I3D$_F$ pour fournir une image tridimensionnelle corrigée I3D$_{FC}$ de la carte pleine. L'image I3D$_{FC}$ corrigée est alors comparée à l'image de référence I3D$_{EC}$, par exemple pour déterminer des paramètres géométriques des blocs de pâte à souder, comme cela a été décrit précédemment.

La figure 8 représente, sous la forme d'un schéma-bloc, un mode de réalisation plus détaillé de l'étape 50 dans lequel l'étape 50 comprend des étapes successives 56, 57, 58 et 60.

Selon un mode de réalisation, les fichiers de description numérique disponibles ne comprennent pas les descriptions des pistes conductrices 24, des ouvertures 20 traversant le support 20 ou des ouvertures 34 dans la couche de résine 32 et le seul fichier de description numérique disponible correspond, par exemple, au fichier de description numérique du masque de sérigraphie utilisé pour le dépôt des blocs de pâte à souder 36.

La figure 9 représente une image équivalente 61 d'un fichier de description numérique qui décrit seulement les positions et les dimensions des ouvertures 62 nécessaires pour réaliser le masque de sérigraphie. L'image 61 représentée en figure 9 est celle du masque de sérigraphie utilisé pour réaliser les blocs 36 de pâte à souder du circuit imprimé représenté sur les figures 3A et 3B.

A l'étape 56, une image tridimensionnelle d'une carte d'apprentissage est déterminée. La carte d'apprentissage peut correspondre à une carte pleine ou vide. L'image tridimensionnelle est corrigée pour supprimer les déformations 2D et 3D. A titre d'exemple, un traitement informatique de l'image peut être mis en oeuvre pour compenser les déformations 2D et 3D. A titre d'exemple, le traitement correctif peut comprendre le filtrage des basses fréquences spatiales de l'image tridimensionnelle de la carte d'apprentissage correspondant à la partie la plus importante des déformations 2D et 3D de la carte d'apprentissage. En particulier, pour chaque point de coordonnées (x, y, z) de la surface de la carte d'apprentissage, un filtrage des basses fréquences peut être appliqué à la coordonnée z. Il s'agit d'un traitement qui ne peut pas être mis en oeuvre lors de l'inspection de chaque circuit imprimé à l'étape 54. En effet, il s'agit d'un traitement qui nécessite une importante quantité de données à traiter, et donc des moyens trop coûteux, et dont la durée n'est pas compatible avec un traitement à une cadence industrielle. En outre, il s'agit d'un traitement qui peut être moins précis que la correction réalisée à l'étape 52 ou 54.

Il est, en outre, utilisé une image bidimensionnelle, appelée image de textures par la suite, correspondant à une vue de dessus de la carte d'apprentissage. Cette vue peut correspondre à une image acquise par la caméra C ou à une combinaison de plusieurs images bidimensionnelles acquises par la caméra C ou par plusieurs caméras. Il peut s'agir d'une image en couleur ou en niveau de gris, de préférence en couleur. L'image de textures correspond à une matrice de pixels, chaque pixel étant défini par une valeur numérique correspondant à un niveau de gris ou un code de couleur. L'image de texture peut être corrigée à partir de l'image tridimensionnelle de la carte d'apprentissage corrigée.

Le système de traitement 16 délimite sur l'image de textures corrigée les zones qui correspondent à des pistes conductrices 24 recouvertes de la couche de résine 32, les composants électroniques, s'ils sont présents, les blocs de pâte à souder 36, les ouvertures 28 traversant le support 20, les plages d'accueil 26. Cette détermination peut être réalisée à partir de la couleur ou du niveau de gris de chaque pixel, par exemple par une recherche de contours ou par un classement statistique des pixels. Le système de traitement 16 détermine une nouvelle image bidimensionnelle, appelée image de labels par la suite, à partir de l'image de textures. L'image de labels correspond à une matrice de pixels dans laquelle à chaque pixel de l'image de texture est associé un code représentatif du type de zone auquel appartient le pixel. A titre d'exemple, un premier code correspond à une piste conductrice 24 recouverte de résine, un deuxième code correspond à un bloc 36 de pâte à souder, un troisième code correspond à une zone de la couche de résine 32 ne recouvrant pas de piste conductrice, un quatrième code correspond à une ouverture traversante 28, etc. L'image de label peut être déterminée à partir de l'image de texture corrigée et, dans ce cas, une image de label corrigée est directement obtenue. A titre de variante, l'image de label peut être déterminée à partir de l'image de texture non corrigée et être ensuite corrigée notamment à partir de l'image tridimensionnelle de la carte d'apprentissage corrigée.

A l'étape 57, il est déterminé une fonction de transformation géométrique $F_0$ qui fait correspondre, à chaque pixel de coordonnées (u, v) de l'image décrite par le fichier de description numérique, un pixel de coordonnées (x, y) des images tridimensionnelles, de textures et de labels, déformées. Lorsque la carte d'apprentissage correspond à une carte pleine, la fonction $F_0$ peut être déterminée à partir d'un certain nombre de points de correspondance entre les positions théoriques des blocs de pâte à souder 62 décrits dans le fichier de description numérique et les blocs de pâte 36 identifiés dans l'image de labels. Par exemple, cette mise en correspondance peut être réalisée par une méthode d'appariement de nuages de points bidimensionnels entre les positions théoriques des blocs de pâte à souder 62 et les blocs de pâte 36. Entre ces points de correspondance, la fonction $F_0$ est déterminée par interpolation.

La fonction $F_0$ permet de corriger l'image tridimensionnelle, de textures et de labels de la carte pleine de sorte que les zones d'intérêts 2D et 3D qui sont, selon certains modes de réalisation décrits ci-après, détectées dans ces différentes images seront exprimées et positionnées dans le repère du fichier de description numérique.

Dans un autre mode de réalisation, la détermination de l'image de labels peut être réalisée à partir de l'image tridimensionnelle et l'image de texture de la carte vide. Un exemple de procédé de détermination de l'image de labels peut mettre en oeuvre le procédé décrit dans la demande de brevet français FR12/57518, non encore publiée. La détermination de la fonction $F_0$ de mise en correspondance entre le fichier de description numérique et la carte vide est réalisée à partir de la mise en correspondance des plages d'accueil décrites dans le fichier de description numérique et celles détectées dans les images tridimensionnelles et de texture de la carte vide. Comme cela a été décrit précédemment, entre ces points de correspondance, la fonction $F_0$ peut être déterminée par interpolation. Dans ce mode de réalisation particulier, la carte d'apprentissage utilisée dans l'étape 56 peut être la carte vide de référence.

A l'étape 58, le système de traitement 16 recherche les zones d'intérêt 2D et 3D sur l'image de labels, sur l'image de textures et/ou sur l'image tridimensionnelle de la carte d'apprentissage. Cette recherche peut être faite de façon automatique, semi-automatique ou manuelle. De préférence, toutes les zones d'intérêt 2D ou 3D de la totalité de l'image de labels sont détectées. La recherche des zones d'intérêt 2D peut être réalisée directement à partir de l'image de labels, de l'image de textures, et/ou de l'image tridimensionnelle de la carte d'apprentissage en recherchant les ouvertures 28 traversant le support ou en recherchant les changements de direction des pistes conductrices 24. La recherche des zones d'intérêt 3D peut être réalisée en utilisant l'image de labels et l'image tridimensionnelle corrigée. A titre d'exemple, le système de traitement 16 détermine les régions de l'image de labels où la couche de résine 32 ne recouvre pas de piste conductrice 24 ou les régions de l'image de labels où la couche de résine 32 recouvre un plan de masse. Parmi les régions ainsi déterminées, les zones d'intérêt 3D sont celles qui ont une hauteur sensiblement constante sur l'image tridimensionnelle corrigée.

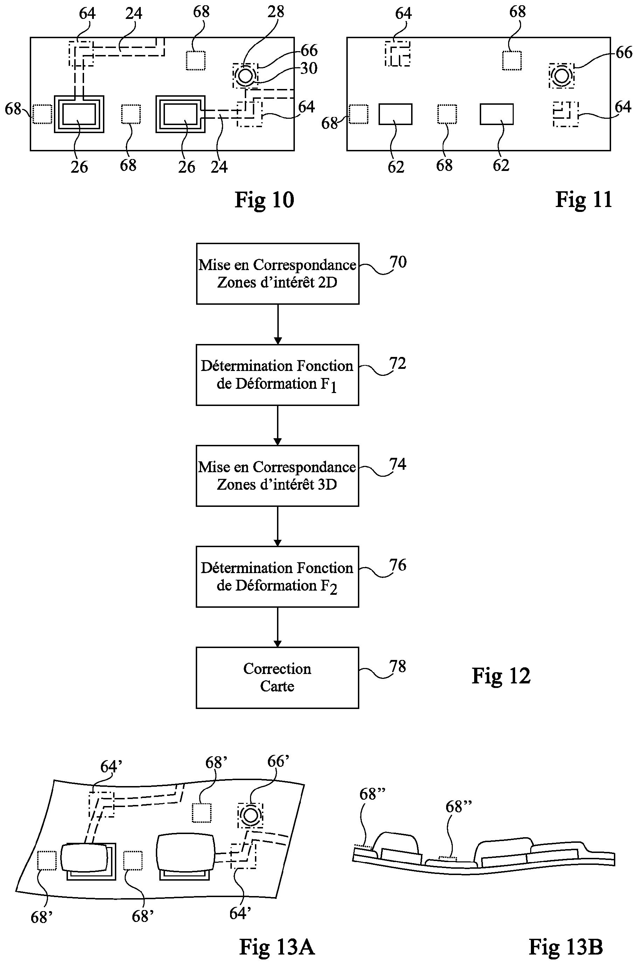

La figure 10 représente les zones d'intérêt 2D et 3D pour l'exemple du circuit imprimé de la figure 2A. A titre d'exemple, trois zones d'intérêt 2D sont représentées : deux zones d'intérêt 2D 64 correspondant à une portion en angle droit d'une piste conductrice 24 et une zone d'intérêt 2D 66 correspondant à une ouverture traversante 28. En outre, trois zones d'intérêt 3D 68 sont représentées et correspondent à des parties du circuit imprimé à hauteur sensiblement constante, au niveau desquelles il n'y a pas de pistes métalliques ni d'ouvertures.

Le système de traitement 16 modifie alors à l'étape 60 le fichier de description numérique pour y ajouter une description de chaque zone d'intérêt 2D et 3D.

La figure 11 représente le modèle illustré en figure 9 au niveau duquel ont été ajoutées les zones d'intérêt 64, 66 et 68 représentées en figure 10.

La description d'une zone d'intérêt 3D dans le fichier de description numérique peut comprendre la position de la frontière délimitant la zone d'intérêt 3D. A titre d'exemple, dans le cas d'une frontière en forme de carré ou de rectangle, il peut s'agir des positions bidimensionnelles des deux coins diagonalement opposés du carré ou du rectangle. A titre d'exemple, la frontière d'une zone d'intérêt 3D peut délimiter un carré de 1 mm de côté. La description de la zone d'intérêt 3D peut, en outre, comprendre l'écart-type de la hauteur de l'image tridimensionnelle sur cette zone, la hauteur moyenne de la zone d'intérêt 3D sur l'image tridimensionnelle, l'équation du plan moyen passant par les points de la zone d'intérêt 3D ou un descripteur statistique de la texture.

La description d'une zone d'intérêt 2D dans le fichier de description numérique peut comprendre la position de la frontière délimitant la zone d'intérêt 2D. A titre d'exemple, dans le cas d'une frontière en forme de carré ou de rectangle, il peut s'agir des positions bidimensionnelles des deux coins diagonalement opposés du carré ou du rectangle. A titre d'exemple, la frontière d'une zone d'intérêt 2D peut délimiter un carré de 5 mm de côté. La description de la zone d'intérêt 2D peut, en outre, comprendre des paramètres géométriques qui sont caractéristiques de la forme à reconnaître dans la zone d'intérêt 2D. Il s'agit, par exemple, d'une ligne de contour, ou d'un motif de textures. La description de la zone d'intérêt 2D peut être également sous la forme d'un descripteur de type SIFT (sigle anglais pour Scale Invariant Feature Transform) décrit notamment dans le brevet US 6 711 293, ou de type SURF (sigle anglais pour Speeded Up Robust Features) ou tout autre descripteur utilisé pour le recalage de formes et de textures.

Selon un autre mode de réalisation, les fichiers de description numérique disponibles comprennent une description des pistes conductrices 24 et une description des ouvertures traversantes 28. Dans ce cas, la recherche des zones d'intérêt 2D et 3D peut être réalisée directement à partir des fichiers de description numérique. Les étapes décrites précédemment de détermination d'une image de labels et l'estimation de la transformation $F_0$ peuvent alors ne pas être présentes. A titre d'exemple, les zones d'intérêt 2D sont déterminées à partir du fichier de description numérique des pistes conductrices 24 et du fichier de description numérique des ouvertures traversantes 28 et les zones d'intérêt 3D sont recherchées en déterminant, à partir des différents fichiers de description numérique, les régions du circuit imprimé recouvertes de la couche de résine 32 et dans lesquelles il n'y a pas de pistes métalliques, de plages d'accueil, d'ouvertures traversantes, d'inscriptions, etc.

Le système de traitement 16 modifie alors l'un des fichiers de description numérique, par exemple le fichier de description numérique du masque de sérigraphie, pour y ajouter une description de chaque zone d'intérêt 2D et 3D.

La figure 12 représente, sous la forme d'un schéma-bloc, un mode de réalisation plus détaillé de l'étape 52 ou 54 du procédé illustré en figure 7. L'étape 52 ou 54 peut être mise en oeuvre par les étapes successives 70, 72, 74, 76 et 78 suivantes.

A l'étape 52 ou 54, l'image tridimensionnelle de seulement une partie de la carte vide/pleine peut être déterminée. Dans ce cas, le procédé comprend une étape de sélection des zones d'intérêt 2D et 3D qui sont à rechercher parmi l'ensemble des zones d'intérêt 2D et 3D déterminées à l'étape 50. Cette sélection peut être réalisée de façon automatique, semi-automatique ou manuelle.

A l'étape 70, les zones d'intérêt 2D sélectionnées sont recherchées dans l'image de textures déformée de la carte vide/pleine. A titre d'exemple, dans le cas où le modèle comprend des marques de repérage, le système de traitement 16 peut corriger la position générale de l'image de textures déformée pour que les marques de l'image de textures déformée soient globalement superposées aux marques du modèle. Chaque zone d'intérêt 2D peut alors être recherchée dans une région de recherche autour de la position attendue de la zone d'intérêt 2D dans le modèle en déplaçant une fenêtre glissante dans la région de recherche de l'image de textures, cette fenêtre glissante ayant par exemple les dimensions de la frontière de la zone d'intérêt 2D et contenant le motif de la zone d'intérêt 2D recherchée. La zone d'intérêt 2D est la partie de l'image de textures pour laquelle le motif coïncide le plus avec l'image de textures. La recherche des zones d'intérêt 2D peut, en outre, être réalisée selon le procédé décrit dans la demande de brevet US2012/0128231.

La figure 13A représente la vue de la figure 6A sur laquelle ont été déterminées des zones d'intérêt 2D 64' et 66' correspondant respectivement aux zones d'intérêt 2D 64 et 66.

A l'étape 72, lorsque les zones d'intérêt 2D sélectionnées ont été trouvées, le système de traitement 16 détermine une fonction de transformation géométrique $F_1$ qui fait correspondre, à chaque pixel de coordonnées $(u, v)$ de l'image décrite par le fichier de description numérique, un pixel de coordonnées $(x, y)$ de l'image de textures déformée.

La fonction $F_1$ est, par exemple, déterminée de la façon suivante :

> pour les zones d'intérêt 2D sélectionnées, la fonction $F_1$ permet de passer de chaque zone d'intérêt 2D sélectionnée sur le fichier de description numérique à la zone d'intérêt 2D correspondante sur l'image de textures et l'image tridimensionnelle déformées ;
> ailleurs qu'aux zones d'intérêt 2D, la fonction $F_1$ est déterminée par interpolation, par exemple par interpolation linéaire, par interpolation polynomiale ou par la méthode des splines.

A l'étape 74, les zones d'intérêt 3D sélectionnées sont recherchées dans l'image tridimensionnelle déformée de la carte vide/pleine. Dans ce but, la fonction de transformation géométrique $F_1$ est appliquée aux zones d'intérêt 3D de l'image décrite par le fichier de description numérique aux coordonnées (u,v). Ceci permet d'obtenir des zones d'intérêt 3D déformées sur l'image de textures déformée de la carte pleine/vide aux coordonnées (x,y). En figure 13A, on a représenté des zones d'intérêt 3D 68' ainsi obtenues correspondant aux zones d'intérêt 3D 68 du modèle de la figure 11 auxquelles a été appliquée la fonction $F_1$.

Selon un mode de réalisation, les zones d'intérêt 3D peuvent alors se trouver sur l'image tridimensionnelle de la carte vide/pleine aux positions correspondant aux zones d'intérêt 3D 68' déterminées sur l'image de textures.

Selon un autre mode de réalisation dans lequel des images d'une même portion de la carte vide/pleine sont acquises par plusieurs caméras, la position d'au moins l'une des zones d'intérêt 3D sur l'image tridimensionnelle de la carte vide/pleine peut être déterminée par triangulation à partir des positions de la zone d'intérêt 3D sur les images acquises par les caméras.

La figure 13B représente la vue de la figure 6B sur lesquelles ont été déterminées des zones d'intérêt 3D 68" correspondant à des zones d'intérêt 68' représentées en figure 13A.

A l'étape 76, lorsque les zones d'intérêt 3D sélectionnées ont été trouvées sur l'image tridimensionnelle, le système de traitement 16 détermine une fonction de transformation géométrique $F_2$ qui fait correspondre à chaque point de coordonnées (x, y) de l'image de textures déformée un point de coordonnées (x, y, z) de l'image tridimensionnelle.

La fonction $F_2$ est, par exemple, déterminée de la façon suivante :

pour les zones d'intérêt 3D sélectionnées, la fonction $F_2$ permet de passer de chaque zone d'intérêt 3D déterminée sur l'image de textures déformée à la zone d'intérêt 3D correspondante sur l'image tridimensionnelle ;

ailleurs qu'aux zones d'intérêt 3D, la fonction $F_2$ est déterminée par interpolation, par exemple par interpolation linéaire, par interpolation polynomiale ou par la méthode des splines.

La fonction $F_2$ transforme donc en surface courbe la surface plane qui correspond à la face supérieure de la couche de résine de l'image tridimensionnelle non déformée, représentant ainsi le gauchissement de la carte pleine/vide.

A l'étape 78, le système de traitement 16 applique l'inverse de la fonction $F_2$ aux coordonnées (x, y) de chaque point de l'image tridimensionnelle de la carte pleine/vide déformée. La valeur obtenue est soustraite de la coordonnée z, correspondant à une coordonnée w. L'inverse de la fonction $F_1$ est appliquée aux coordonnées x et y, correspondant aux coordonnées (u, v). Une image tridimensionnelle corrigée est alors obtenue. A tout point de coordonnées (x, y, z) de l'image tridimensionnelle déformée correspond donc un point de coordonnées (u, v, w) de l'image tridimensionnelle corrigée donné par les relations suivantes :

$$(u, \ v) \ = \ F_1^{-1}(x, \ y)$$

$$w \ = \ z \ - \ F_2^{-1}(x, \ y)$$

Les étapes de détermination des fonctions $F_1$ et $F_2$ aux étapes 52 et 54 peuvent, de façon avantageuse, être mises en oeuvre à une échelle industrielle, et notamment à une cadence industrielle.

Selon un autre mode de réalisation, une seule fonction transformation géométrique peut être directement déterminée qui à chaque point de coordonnées (x, y, z) de l'image tridimensionnelle fait correspondre un point de coordonnées (u, v, w) de l'image tridimensionnelle corrigée.

Des modes de réalisation particuliers ont été décrits. Diverses variantes et modifications apparaîtront à l'homme de l'art. En particulier, bien que le système 10 décrit précédemment soit adapté à la mise en oeuvre d'un procédé de détermination d'une image tridimensionnelle d'un objet par projection d'images sur l'objet, il est clair que le procédé de détermination de l'image tridimensionnelle peut être différent, par exemple mettant en oeuvre des méthodes interférométriques. En outre, bien qu'un système d'inspection optique ait été décrit pour l'inspection de circuits électroniques, il est clair que le système d'inspection optique peut être utilisé pour l'inspection optique d'autres objets.

**Revendications**

1. Procédé de correction d'une image tridimensionnelle initiale d'un objet (Card) déformé comprenant la fourniture d'un modèle de l'objet non déformé comprenant des premières zones (68), la détermination dans l'image tridimensionnelle initiale de deuxièmes zones (68") correspondant aux premières zones, la détermination d'une première transformation géométrique qui fait correspondre les deuxièmes zones aux premières zones et la détermination d'une image tridimensionnelle corrigée à partir de la première transformation géométrique et de l'image tridimensionnelle initiale, et comprenant en outre les étapes suivantes :

fournir le modèle (61) de l'objet non déformé comprenant des troisièmes zones (66, 64) ;
acquérir au moins une image bidimensionnelle de l'objet (Card) par un capteur d'images (C) ;
rechercher dans l'image bidimensionnelle au moins des quatrièmes zones (66', 64') correspondant aux troisièmes zones ;
déterminer une deuxième transformation géométrique qui fait correspondre les quatrièmes zones aux troisièmes zones ;
appliquer la deuxième transformation aux premières zones (68) pour obtenir des cinquièmes zones (68') dans l'image bidimensionnelle ;
rechercher dans l'image tridimensionnelle initiale les deuxièmes zones (68") correspondant aux cinquièmes zones ;
déterminer une troisième transformation géométrique qui fait correspondre les deuxièmes zones aux cinquièmes zones ; et
déterminer l'image tridimensionnelle corrigée à partir des deuxième et troisième transformations géométriques et de l'image tridimensionnelle initiale.

2. Procédé selon la revendication 1, dans lequel l'objet comprend un circuit imprimé (Card$_E$) comprenant au moins un support (20), des pistes conductrices (24) sur le support et une couche de résine (32) recouvrant au moins en partie les pistes conductrices.

3. Procédé selon la revendication 2, dans lequel au moins l'une des premières zones comprend une portion plane de la couche de résine (32).

4. Procédé selon la revendication 2 ou 3, dans lequel au moins l'une des premières zones comprend le bord d'une piste conductrice (24).

5. Procédé selon l'une quelconque des revendications 2 à 4, dans lequel au moins l'une des troisièmes zones (66) comprend un motif d'une ouverture (28) traversant le circuit imprimé (Card$_E$).

6. Procédé selon l'une quelconque des revendications 2 à 5, dans lequel au moins l'une des troisièmes zones (64) comprend un motif d'une piste conductrice (24) changeant de direction.

7. Procédé selon l'une quelconque des revendications 1 à 6, comprenant une étape de fourniture d'un modèle (61) initial ne comprenant pas les premières et troisièmes zones (64, 66, 68) et une étape de modification du modèle initial pour y ajouter une description des premières et troisièmes zones.

8. Procédé selon la revendication 7, comprenant les étapes suivantes, dans une plage d'apprentissage :

acquérir une image tridimensionnelle d'un objet d'apprentissage (Card) ;
corriger les déformations de l'image tridimensionnelle de l'objet d'apprentissage ;
déterminer des premières et troisièmes zones (64, 66, 68) sur l'image tridimensionnelle corrigée de l'objet d'apprentissage ; et
modifier le modèle (61) initial pour y ajouter une description des premières et troisièmes zones déterminées.

9. Procédé selon la revendication 8, dans lequel le modèle est représentatif d'une image bidimensionnelle.

10. Procédé selon les revendications 8 et 9, comprenant, en outre, la détermination d'une quatrième transformation géométrique qui fait correspondre les points de l'image tridimensionnelle de l'objet d'apprentissage (Card) aux pixels du modèle (61) initial.

11. Procédé selon l'une quelconque des revendications 1 à 10, comprenant les étapes suivantes :

déterminer une première image tridimensionnelle d'un circuit imprimé vide (Card$_E$) ;
déterminer la première transformation géométrique associée à la première image tridimensionnelle ;
corriger la première image tridimensionnelle à partir de la première transformation géométrique associée à la première image tridimensionnelle ;
déterminer une deuxième image tridimensionnelle d'un circuit imprimé (Card$_F$) recouvert de blocs de pâte à souder (36) ;
déterminer la première transformation géométrique associée à la deuxième image tridimensionnelle ;
corriger la deuxième image tridimensionnelle à partir de la première transformation géométrique associée à la deuxième image tridimensionnelle ; et
comparer les première et deuxième images tridimensionnelles corrigées.

12. Procédé selon la revendication 11, comprenant une étape de sélection de premières zones parmi lesdites premières zones pour la détermination de la première transformation géométrique associée à la deuxième image tridimensionnelle.

13. Procédé selon la revendication 12, comprenant une étape de sélection de troisièmes zones parmi lesdites troisièmes zones pour la détermination de la première transformation géométrique associée à la deuxième image tridimensionnelle.

**Patentansprüche**

1. Verfahren zum Korrigieren eines dreidimensionalen Anfangs- bzw. Ausgangsbildes eines verformten Objekts (Card), das das Vorsehen eines Modells des unverformten Objekts aufweist, das erste Bereiche (68) aufweist, Bestimmen in dem dreidimensionalen Anfangsbild von zweiten Bereichen (68''), die den ersten Bereichen entsprechen, Bestimmen einer ersten geometrischen Transformation, die die zweiten Bereiche an die ersten Bereiche anpasst, und Bestimmen eines korrigierten dreidimensionalen Bildes basierend auf der ersten geometrischen Transformation und des dreidimensionalen Anfangsbildes, und das ferner die folgenden Schritte aufweist:

Vorsehen des Modells (61) des unverformten Objekts, das dritte Bereiche (66, 64) aufweist;
Erfassen von wenigstens einem zweidimensionalen Bildes des Objekts (Card) mit einem Bildsensor (C);
Suchen in dem zweidimensionalen Bild nach wenigstens vierten Bereichen (66', 64'), die den dritten Bereichen entsprechen;
Bestimmen einer zweiten geometrischen Transformation, die die vierten Bereiche an die dritten Bereiche anpasst;
Anlegen der zweiten Transformation an die ersten Bereiche (68), um fünfte Bereiche (68') in dem zweidimensionalen Bild zu erhalten;
Suchen in dem dreidimensionalen Anfangsbild nach den zweiten Bereichen (68''), die den fünften Bereichen entsprechen;
Bestimmen einer dritten geometrischen Transformation, die die zweiten Bereiche an die fünften Bereiche anpasst; und
Bestimmen des korrigierten dreidimensionalen Bildes basierend auf den zweiten und dritten geometrischen Transformationen und auf dem dreidimensionalen Anfangsbild.

2. Verfahren nach Anspruch 1, wobei das Objekt eine Leiterplatte (Card$_E$) aufweist, die wenigstens einen Träger (20), Leiterbahnen (24) auf dem Träger und eine Harzschicht (32) aufweist, die wenigstens teilweise die Leiterbahnen abdeckt.

3. Verfahren nach Anspruch 2, wobei wenigstens eine der ersten Bereiche einen ebenen Teil der Harzschicht (32) aufweist.

4. Verfahren nach Anspruch 2 oder 3, wobei wenigstens eine der ersten Bereiche die Kante einer Leiterbahn (24) aufweist.

5. Verfahren nach einem der Ansprüche 2 bis 4, wobei wenigstens eine der dritten Bereiche (66) ein Muster einer Öffnung (28) aufweist, die die Leiterplatte (Card$_E$) kreuzt.

6. Verfahren nach einem der Ansprüche 2 bis 5, wobei wenigstens eine der dritten Bereiche (64) ein Muster einer die Richtung ändernden Leiterbahn (24) aufweist.

7. Verfahren nach einem der Ansprüche 1 bis 6, das einen Schritt des Vorsehens eines Anfangsmodells (61) aufweist, das nicht die ersten und dritten Bereiche (64, 66, 68) aufweist, und einen Schritt des Modifizierens des Anfangsmodells zum Hinzufügen einer Beschreibung der ersten und dritten Bereiche.

8. Verfahren nach Anspruch 7, das die folgenden Schritte innerhalb einer Trainingsphase aufweist:

Erfassen eines dreidimensionalen Bildes eines Trainingsobjekts (Card);
Korrigieren der Deformationen des dreidimensionalen Bildes des Trainingsobjekts;
Bestimmen erster und dritter Bereiche (64, 66, 68) in dem korrigierten dreidimensionalen Bild des Trainingsobjekts; und
Modifizieren des Anfangsmodells (61) zum Hinzufügen einer Beschreibung der bestimmten ersten und dritten Bereiche.

9. Verfahren nach Anspruch 8, wobei das Modell ein zweidimensionales Bild darstellt.

10. Verfahren nach Ansprüchen 8 und 9, das ferner das Bestimmen einer vierten geometrischen Transformation aufweist, die die Punkte des dreidimensionalen Bildes des Trainingsobjekts (Card) an die Pixel des Anfangsmodells (61) anpasst.

11. Verfahren nach einem der Ansprüche 1 bis 10, das die folgenden Schritte aufweist:

Bestimmen eines ersten dreidimensionalen Bildes einer leeren Leiterplatte (Card$_E$);
Bestimmen der ersten geometrischen Transformation, die mit dem ersten dreidimensionalen Bild assoziiert ist;
Korrigieren des ersten dreidimensionalen Bildes aus der ersten geometrischen Transformation, die mit dem ersten dreidimensionalen Bild assoziiert ist;
Bestimmen eines zweiten dreidimensionalen Bildes einer mit Lötpastenblöcken (36) bedeckten Leiterplatte (Card$_F$);
Bestimmen der ersten geometrischen Transformation, die mit dem zweiten dreidimensionalen Bild assoziiert ist;
Korrigieren des zweiten dreidimensionalen Bildes basierend auf der ersten geometrischen Transformation, die mit dem zweiten dreidimensionalen Bild assoziiert ist; und
Vergleichen der ersten und zweiten korrigierten dreidimensionalen Bilder.

**12.** Verfahren nach Anspruch 11, das einen Schritt des Auswählens erster Bereiche aus den ersten Bereichen zum Bestimmen der ersten geometrischen Transformation, die mit dem zweiten dreidimensionalen Bild assoziiert ist, aufweist.

**13.** Verfahren nach Anspruch 12, das einen Schritt des Auswählens dritter Bereiche aus den dritten Bereichen zum Bestimmen der ersten geometrischen Transformation, die mit dem zweiten dreidimensionalen Bild assoziiert ist, aufweist.

## Claims

**1.** A method of correcting an initial three-dimensional image of a deformed object (Card) comprising providing a model of the non-deformed object comprising first areas (68), determining in the initial three-dimensional image second areas (68") corresponding to the first areas, determining a first geometric transformation which matches the second areas with the first areas, and determining a corrected three-dimensional image based on the first geometric transformation and on the initial three-dimensional image, and further comprising the following steps:

> providing the model (61) of the non-deformed object comprising third areas (66, 64);
> acquiring at least on two-dimensional image of the object (Card) with an image sensor (C);
> searching in the two-dimensional image for at least fourth areas (66', 64') corresponding to the third areas;
> determining a second geometric transformation which matches the fourth areas with the third areas;
> applying the second transformation to the first areas (68) to obtain fifth areas (68') in the two-dimensional image;
> searching in the initial three-dimensional image for the second areas (68") corresponding to the fifth areas;
> determining a third geometric transformation which matches the second areas with the fifth areas; and
> determining the corrected three-dimensional image based on the second and third geometric transformations and on the initial three-dimensional image.

**2.** The method of claim 1, wherein the object comprises a printed circuit ($Card_E$) comprising at least a support (20), conductive tracks (24) on the support, and a resin layer (32) at least partly covering the conductive tracks.

**3.** The method of claim 2, wherein at least one of the first areas comprises a planar portion of the resin layer (32).

**4.** The method of claim 2 or 3, wherein at least one of the first areas comprises the edge of a conductive track (24).

**5.** The method of any of claims 2 to 4, wherein at least one of the third areas (66) comprises a pattern of an opening (28) crossing the printed circuit ($Card_E$).

**6.** The method of any of claims 2 to 5, wherein at least one of the third areas (64) comprises a pattern of a conductive track (24) changing direction.

**7.** The method of any of claims 1 to 6, comprising a step of providing an initial model (61) which does not comprise the first and third areas (64, 66, 68) and a step of modifying the initial model to add thereto a description of the first and third areas.

**8.** The method of claim 7, comprising the steps of, in a training phase:

> acquiring a three-dimensional image of a training object (Card);
> correcting the deformations of the three-dimensional image of the training object;
> determining first and third areas (64, 66, 68) on the corrected three-dimensional image of the training object; and
> modifying the initial model (61) to add thereto a description of the determined first and third areas.

**9.** The method of claim 8, wherein the model is representative of a two-dimensional image.

**10.** The method of claims 8 and 9, further comprising determining a fourth geometric transformation which matches the points of the three-dimensional image of the training object (Card) with the pixels of the initial model (61).

**11.** The method of any of claims 1 to 10, comprising the steps of:

> determining a first three-dimensional image of an empty printed circuit ($Card_E$);
> determining the first geometric transformation associated with the first three-dimensional image;
> correcting the first three-dimensional image from the first geometric transformation associated with the first three-dimensional image;
> determining a second three-dimensional image of a printed circuit ($Card_F$) covered with welding paste blocks (36);

determining the first geometric transformation associated with the second three-dimensional image;

correcting the second three-dimensional image based on the first geometric transformation associated with the second three-dimensional image; and

comparing the first and second corrected three-dimensional images.

12. The method of claim 11, comprising a step of selecting first areas from among said first areas for the determination of the first geometric transformation associated with the second three-dimensional image.

13. The method of claim 12, comprising a step of selecting third areas from among said third areas for the determination of the first geometric transformation associated with the second three-dimensional image.

**Fig 1**

**Fig 2A**

**Fig 2B**

**Fig 3A**

**Fig 3B**

**Fig 4A**

**Fig 4B**

Card_E  24  28  30  24

34  26  34  26

**Fig 5A**

32  Card_E  26  32  34  26  32  21

20  22

**Fig 5B**

Card_F  24  28  30  24

36  34  26  26  36  34

**Fig 6A**

Card_F  32  36  36  26  24  32  32  21

26  20  22

**Fig 6B**

| |
|---|
| Définition, Zones d'interêt 2D et 3D  50 |

↓

| |
|---|
| Correction Carte de référence  52 |

↓

| |
|---|
| Correction Carte à inspecter  54 |

**Fig 7**

| |
|---|
| Correction Carte d'apprentissage  56 |

↓

| |
|---|
| Réalignement  57 |

↓

| |
|---|
| Détection Zones d'intérêt  58 |

↓

| |
|---|
| Modification Modèle Carte  60 |

**Fig 8**

61

62  62

**Fig 9**

Fig 10

Fig 11

Mise en Correspondance
Zones d'intérêt 2D — 70

Détermination Fonction
de Déformation $F_1$ — 72

Mise en Correspondance
Zones d'intérêt 3D — 74

Détermination Fonction
de Déformation $F_2$ — 76

Correction
Carte — 78

Fig 12

Fig 13A

Fig 13B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 20120128231 A
- FR 1257518
- US 6711293 B